# EUROPEAN PATENT SPECIFICATION

(11) **EP 4 220 826 B1**
(45) Date of publication and mention of the grant of the patent: **08.07.2026**
(21) Application number: 23153478.5
(22) Date of filing: 26.01.2023
(51) Int. Cl.: H01M 50/193, H01M 50/197, H01M 50/198, H01M 50/342, H01M 50/375, H01M 50/533

(54) **ELECTROCHEMICAL DEVICE AND ELECTRONIC DEVICE CONTAINING SAME**
ELEKTROCHEMISCHE VORRICHTUNG UND ELEKTRONISCHE VORRICHTUNG DAMIT
DISPOSITIF ÉLECTROCHIMIQUE ET DISPOSITIF ÉLECTRONIQUE LE CONTENANT

(30) Priority: 29.01.2022 CN 202210112922
(43) Date of publication of application: 02.08.2023
(73) Proprietor: Ningde Amperex Technology Ltd., Ningde City, Fujian 352100 (CN)
(72) Inventor: CHEN, Jiale, Ningde City, Fujian Province, People's Republic of China, 352100 (CN); XIA, Hengtao, Ningde City, Fujian Province, People's Republic of China, 352100 (CN)
(74) Representative: Icosa

(56) References cited:
- WO-A1-2021/201214
- KR-A- 20200 016 662
- NICOLAS FEDELICH: "Application Handbook Thermal Analysis of Polymers Selected Applications Thermal Analysis", 1 January 2013 (2013-01-01), XP055608279, Retrieved from the Internet <URL:https://www.mt.com/dam/LabDiv/guides-glen/ta-polymer/TA_Polymers_Selected_Apps_EN.pdf> [retrieved on 20190724]

## Description

### TECHNICAL FIELD

This application relates to the technical field of electrochemistry, and in particular, to an electrochemical device and an electronic device containing the electrochemical device.

### BACKGROUND

Electrochemical devices, such as a lithium-ion battery, are widely used in the fields such as wearable devices, smartphones, unmanned aerial vehicles, and notebook computers by virtue of a high working voltage, a high energy density, environmental friendliness, stable cycling, and other merits. With the development of modern information technology and the wider application of the electrochemical devices, higher requirements are imposed on safety performance of the lithium-ion battery, such as the prevention of explosion of lithium-ion batteries according to the KR202000016662 and WO2021201214.

However, currently, an electrochemical device is prone to abnormalities such as a short circuit and overcurrent charging during charging or use. Such abnormalities increase an internal temperature of the electrochemical device, or even result in safety hazards such as fire and explosion caused by an excessive internal temperature, thereby deteriorating safety performance of the electrochemical device.

### SUMMARY

An objective of this application is to provide an electrochemical device and an electronic device containing the electrochemical device, so as to enhance safety performance of the electrochemical device. Specific technical solutions are as follows:

A first aspect of this application provides an electrochemical device. The electrochemical device includes an electrode assembly, a tab, a tab adhesive, and a housing for accommodating the electrode assembly. One end of the tab is electrically connected to the electrode assembly. Another end of the tab extends out of the housing. The tab includes a first region and a second region other than the first region. The first region is covered by the tab adhesive. A resistance per unit length R1 of the first region and a resistance per unit length R2 of the second region satisfy: 1.5 ≤ R1/R2 ≤ 12. The resistance per unit length R2 of the second region is 0.05 mΩ/mm to 0.3 mΩ/mm. The resistance per unit length R1 of the first region is 0.075 mΩ/mm to 3.6 mΩ/mm. The tab adhesive comprises a first adhesive layer and a second adhesive layer. A material of the first adhesive layer is polyethylene (PE), and a material of the second adhesive layer is polypropylene. The material of the first adhesive layer has a lower melting point than the material of the second adhesive layer. Along a width direction of the tab, the tab adhesive is of a strip-shaped composite structure. The second adhesive layer and the first adhesive layer are disposed alternately along the width direction of the tab. The resistance of the first region is increased in comparison to the second region by letting the resistance per unit length R1 of the first region be greater than the resistance per unit length R2 of the second region, and by letting the two resistances satisfy the foregoing relationship. In this way, when an abnormality such as a short circuit or overcurrent charging occurs in the electrochemical device, the first region in which a current flows can generate heat under assistance of the current and heats up faster than the second region. Therefore, the tab adhesive in the first region melts. A top seal between the tab at the melted part and the housing fails. A gas generated by an electrolytic solution escapes from the failed part of the top seal, and the electrochemical device achieves the effect of exhausting the gas in advance. In this way, the hazards such as fire and explosion of the electrochemical device are reduced, and the safety performance of the electrochemical device is enhanced.

In an embodiment of this application, a material of the first region includes at least one of nickel, aluminum, nickel-plated copper, an iron alloy, a nickel alloy, an aluminum-nickel alloy, or an aluminum alloy. The foregoing material is of a relatively high resistivity, and increases the resistance of the first region when applied to the first region. In this way, the tab adhesive in the first region melts, and the electrochemical device can achieve the gas exhausting effect in advance, thereby reducing the hazards such as fire and explosion. By this means, the safety performance of the electrochemical device is enhanced.

In an embodiment of this application, the first region includes at least one groove along a thickness direction of the tab or at least one hollowed-out structure that runs through along the thickness direction of the tab. By disposing the groove or hollowed-out structure in the first region, the resistance per unit length R1 of the first region and the resistance per unit length R2 of the second region are caused to satisfy 1.5 ≤ R1/R2 ≤ 12, and the resistance of the first region is increased in comparison to the resistance of the second region, thereby enhancing the safety performance of the electrochemical device.

In an embodiment of this application, viewed along a width direction of the tab, a shape of the groove is at least one of a triangle, a semicircle, a rectangle, or a square. A percentage of an area of the groove in a total area of the first region is greater than 0% and less than or equal to 50%. By setting the area of the groove to fall within the foregoing range, the resistance of the first region is increased, and the resistance per unit length R1 of the first region and the resistance per unit length R2 of the second region are caused to satisfy 1.5 ≤ R1/R2 ≤ 12, and the resistance of the first region is increased in comparison to the resistance of the second region, thereby enhancing the safety performance of the electrochemical device.

In an embodiment of this application, viewed along the thickness direction of the tab, a shape of the hollowed-out structure is at least one of a triangle, a semicircle, a rectangle, or a square. A percentage of an area of the hollowed-out structure in a total area of the first region is greater than 0% and less than or equal to 50%. By setting the area of the hollowed-out structure to fall within the foregoing range, the resistance of the first region is increased, and the resistance per unit length R1 of the first region and the resistance per unit length R2 of the second region are caused to satisfy: 1.5 ≤ R1/R2 ≤ 12.

In an embodiment of this application, a melting point of the first adhesive layer is 110 °C to 135 °C, and a melting point of the second adhesive layer is 145 °C to 180 °C. In this way, the electrochemical device is facilitated in achieving the gas exhausting effect in advance, the strength of sealing between the tab and the housing is increased, and the safety performance of the electrochemical device is enhanced.

In an embodiment of this application, the number of the first adhesive layers is 1 to 4. The tab adhesive of the foregoing structure facilitates reduction of the thickness occupied by the top seal.

In an embodiment of this application, a thickness of the tab adhesive is 40 µm to 200 µm. By controlling the thickness of the tab adhesive to fall within the foregoing range, the protective effect of the tab adhesive can be exerted sufficiently, and the possibility of impairing the energy density of the electrochemical device is reduced.

In an embodiment of this application, viewed along a thickness direction of the tab, a percentage of an area of the first adhesive layer in a total area of the tab adhesive is 20% to 80%. Controlling the area percentage of the first adhesive layer to fall within the foregoing range facilitates enhancement of the safety performance of the electrochemical device.

In an embodiment of this application, a width of the tab adhesive is 1 mm to 10 mm, and a shoulder width of the tab adhesive is 0.2 mm to 10 mm. The shoulder width of the tab adhesive is a distance by which one side of the tab adhesive exceeds an edge of the tab on a same side along a width direction of the tab. Controlling the width and shoulder width of the tab adhesive to fall within the foregoing ranges facilitates increase of the strength of sealing between the tab and the housing, prevents corrosion and short circuits between the tab and the housing caused by over-melting of the tab adhesive, and in turn, enhances the safety performance of the electrochemical device.

A material of the first adhesive layer is polyethylene (PE)and a material of the second adhesive layer is polypropylene. The foregoing materials enable the melting point of the first adhesive layer and the second adhesive layer to fall within the range specified herein, facilitate the electrochemical device to achieve the gas exhausting effect in advance, increase the sealing strength of the electrochemical device, and enhance the safety performance of the electrochemical device.

A second aspect of this application provides an electronic device. The electronic device includes the electrochemical device according to any one of the foregoing embodiments. The electronic device achieves good safety performance.

This application provides an electrochemical device and an electronic device that includes the electrochemical device. In the electrochemical device, the resistance of the first region is increased in comparison to the resistance of the second region by letting a resistance per unit length R1 of the first region be greater than a resistance per unit length R2 of a second region, and by letting the two resistances satisfy 1.5 ≤ R1/R2 ≤ 12. In this way, when an abnormality such as a short circuit or overcurrent charging occurs in the electrochemical device, the first region in which a current flows can generate heat under assistance of the current and heats up faster than the second region. Therefore, the tab adhesive in the first region melts. A top seal between the tab at the melted part and the housing fails. A gas generated by an electrolytic solution escapes from the failed part of the top seal, and the electrochemical device achieves the gas exhausting effect in advance. In this way, the hazards such as fire and explosion of the electrochemical device are reduced, and the safety performance of the electrochemical device is enhanced.

Definitely, implementation of any one product or method according to this application does not necessarily achieve all of the foregoing advantages concurrently.

### BRIEF DESCRIPTION OF DRAWINGS

To describe the technical solutions in some embodiments of this application more clearly, the following outlines the drawings to be used in the description of some embodiments of this application . Evidently, the drawings outlined below merely illustrate some embodiments of this application, and a person of ordinary skill in the art may derive other embodiments from the drawings.
FIG. 1 is a schematic structural diagram of an electrochemical device according to an embodiment of this application;
FIG. 2a is a schematic sectional view of a tab shown in FIG. 1 and sectioned along a line A-A;
FIG. 2b is a schematic sectional view of a tab shown in FIG. 1 and sectioned along a line A-A;
FIG. 2c is a schematic sectional view of a tab shown in FIG. 1 and sectioned along a line A-A;
FIG. 2d is a schematic sectional view of a tab shown in FIG. 1 and sectioned along a line A-A;
FIG. 3e is a schematic structural diagram of a tab according to another embodiment of this application;
FIG. 3f is a schematic structural diagram of a tab according to still another embodiment of this application;
FIG. 3g is a schematic structural diagram of a tab according to still another embodiment of this application;
FIG. 3h is a schematic structural diagram of a tab according to still another embodiment of this application;
FIG. 3i is a schematic structural diagram of a tab according to still another embodiment of this application;
FIG. 4 is a schematic structural diagram of a tab adhesive in an electrochemical device according to some embodiments of this application;
FIG. 5 is a schematic sectional view of the tab adhesive shown in FIG. 4 and sectioned along a line M-M;
FIG. 6 is a schematic structural diagram of a tab adhesive in an electrochemical device according to some other embodiments of this application;
FIG. 7 is a schematic sectional view of the tab adhesive shown in FIG. 6 and sectioned along a line Y-Y;
FIG. 8 is a schematic structural diagram of a tab adhesive in an electrochemical device according to another embodiment of this application;
FIG. 9 is a schematic sectional view of the tab adhesive shown in FIG. 10 and sectioned along a line Q-Q;
FIG. 10 is a schematic structural diagram of the tab adhesive shown in FIG. 8 and subjected to top sealing and hot pressing; and
FIG. 11 is a schematic structural diagram of a tab and a tab adhesive according to another embodiment of this application.

Reference numerals:
1 tab; 11 first region; 12 second region; 111 groove; 112 hollowed-out structure; 2 tab adhesive; 21 first adhesive layer; 22 second adhesive layer; 221 through-hole; 3. housing; 100 electrochemical device.

### DETAILED DESCRIPTION OF EMBODIMENTS

To make the objectives, technical solutions and advantages of this application clearer, the following describes this application in further detail with reference to drawings and embodiments. Evidently, the described embodiments are merely a part of but not all of the embodiments of this application.

It is hereby noted that in specific embodiments of this application, this application is construed by using a lithium-ion battery as an example of the electrochemical device, but the electrochemical device according to this application is not limited to the lithium-ion battery.

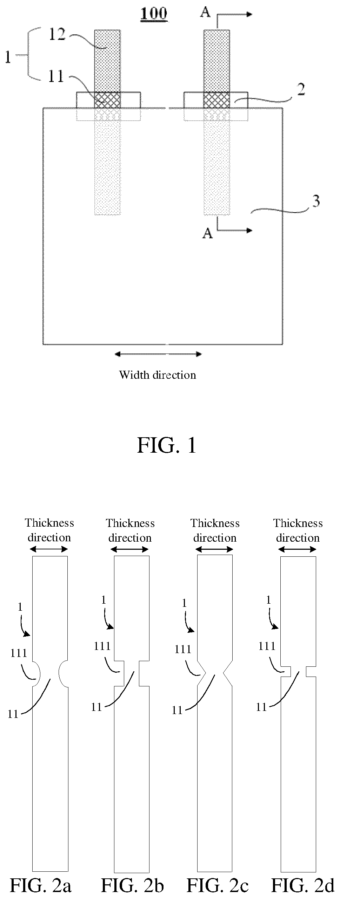

As shown in FIG. 1, this application provides an electrochemical device 100, including an electrode assembly (not shown in the drawing), a tab 1, a tab adhesive 2, and a housing 3 for accommodating the electrode assembly. One end of the tab 1 is electrically connected to the electrode assembly, and another end of the tab 1 extends out of the housing 3. The tab 1 includes a first region 11 and a second region 12 other than the first region 11. The first region 11 is covered by the tab adhesive 2. A resistance per unit length R1 of the first region 11 and a resistance per unit length R2 of the second region 12 satisfy: 1.5 ≤ R1/R2 ≤ 12. The unit of the resistance per unit length is mΩ/mm.

The applicant hereof finds that the resistance of the first region 11 is increased in comparison to the resistance of the second region 12 by letting the resistance per unit length R1 of the first region 11 be greater than the resistance per unit length R2 of the second region 12, and by letting the two resistances satisfy the foregoing relationship. In this way, when an abnormality such as a short circuit or overcurrent charging occurs in the electrochemical device 100, the first region 11 in which a current flows can generate heat under assistance of the current and heats up faster than the second region 12. Therefore, the tab adhesive 2 in the first region 11 melts. A top seal between the tab 1 at the melted part and the housing 3 fails. The gas generated by an electrolytic solution can be exhausted through the failed part of the top seal before the temperature of the electrochemical device 100 reaches a critical failure temperature, so that the electrochemical device 100 achieves the gas exhausting effect in advance. In this way, the hazards such as fire and explosion of the electrochemical device 100 are reduced, and the safety performance of the electrochemical device 100 is enhanced.

It is hereby noted that the resistance per unit length R1 of the first region and the resistance per unit length R2 of the second region are not particularly limited in this application, as long as the objectives of this application can be achieved. Understandably, the resistance per unit length R2 of the second region is usually determined by the material of the second region in the positive tab and/or the negative tab. The resistance per unit length R1 of the first region may be determined according to the value of an R1/R2 ratio. The resistance per unit length R2 of the second region is 0.05 mΩ/mm to 0.3 mQ/mm, and preferably 0.088 mΩ/mm to 0.214 mQ/mm. The resistance per unit length R1 of the first region is 0.075 mΩ/mm to 3.6 mΩ/mm, and preferably 0.146 mΩ/mm to 2.5 mΩ/mm.

In an embodiment of this application, the material of the first region includes at least one of nickel, aluminum, a nickel-plated copper alloy, an iron alloy, a nickel alloy, an aluminum-nickel alloy, or an aluminum alloy. The foregoing materials are of a relatively high resistivity, and, when applied to the first region, cause the resistance per unit length R1 of the first region and the resistance per unit length R2 of the second region to satisfy 1.5 ≤ R1/R2 ≤ 12, so that the resistance of the first region is increased in comparison to the resistance of the second region. In this way, the tab adhesive in the first region melts, and the electrochemical device can achieve the gas exhausting effect in advance, thereby reducing the hazards such as fire and explosion. By this means, the safety performance of the electrochemical device is enhanced.

Preferably, the material of the first region includes at least one of an iron alloy, a nickel alloy, an aluminum-nickel alloy, or an aluminum alloy. The foregoing preferred materials are of a higher resistivity, and can further increase the resistance of the first region, thereby making it convenient for the tab adhesive in the first region to melt, making the electrochemical device exhaust the gas in advance, and facilitating enhancement of the safety performance of the electrochemical device.

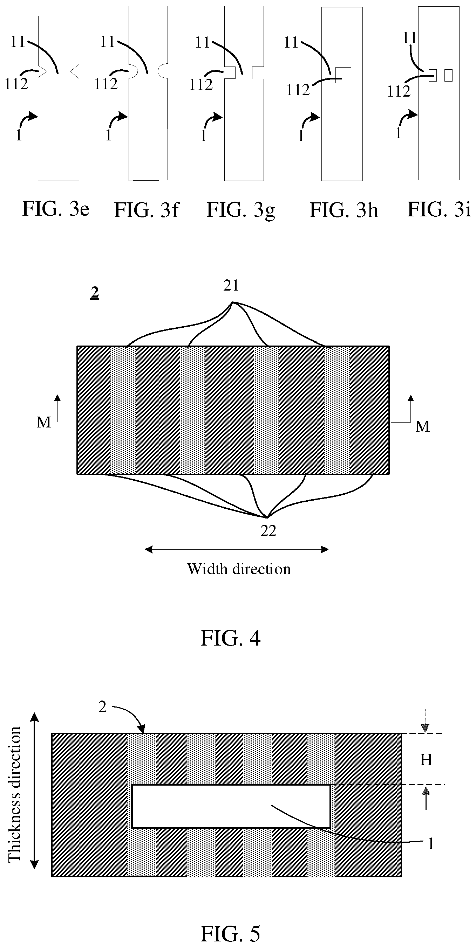

In an embodiment of this application, as shown in FIG. 2a to FIG. 2d and FIG. 3e to FIG. 3i, the first region 11 includes at least one groove 111 along a thickness direction of the tab 1 or at least one hollowed-out structure 112 that runs through along the thickness direction of the tab 1 (referring to FIG. 2a to FIG. 2d). By disposing the groove 111 or hollowed-out structure 112 in the first region 11, the resistance per unit length R1 of the first region 11 and the resistance per unit length R2 of the second region 12 are caused to satisfy 1.5 ≤ R1/R2 ≤ 12, and the resistance of the first region 11 is increased in comparison to the resistance of the second region 12. In this way, the tab adhesive in the first region 11 melts, and the electrochemical device 100 can achieve the gas exhausting effect in advance, thereby reducing the hazards such as fire and explosion. By this means, the safety performance of the electrochemical device 100 is enhanced.

It is hereby noted that the number of grooves 111 disposed along the thickness direction of the tab 1 in the first region 11 is at least one. A person skilled in the art may dispose one or more (such as one, two, three, or four) grooves 111 on two sides of the tab 1 along the thickness direction according to actual needs. The position of the groove 111 is not particularly limited in this application, as long as the groove is disposed in the first region 11 and the objectives of this application can be achieved. FIG. 2a to FIG. 2d illustrate several shapes of the groove 111. The illustration is intended as examples only, but not intended to limit the shape of the groove 111. The number of hollowed-out structures 112 that run through the tab along the thickness direction of the tab 1 in the first region 11 is at least one. A person skilled in the art may dispose one or more (such as one, two, three, or four) hollowed-out structures 112 in the thickness direction of the tab 1 according to actual needs. The position of the hollowed-out structure 112 is not particularly limited in this application, as long as the hollowed-out structure is disposed in the first region 11 and the objectives of this application can be achieved. FIG. 3e to FIG. 3i illustrate several shapes of the hollowed-out structures 112. The illustration is intended as examples only, but not intended to limit the shape of the hollowed-out structure 112. It is hereby noted that in this application, "≥" means "greater than or equal to", and "≤" means "less than or equal to".

Understandably, the width direction and the thickness direction referred to herein are both defined with respect to the tab itself. The foregoing definitions with respect to directions are intended for ease of describing this application. The directions defined herein may be understood with reference to the drawings and the relative positions of the elements in the actual device.

In an embodiment of this application, as shown in FIG. 2a to FIG. 2d, viewed along the width direction of the tab 1 (referring to FIG. 1), the shape of the groove 111 is at least one of a triangle (as shown in FIG. 2c), a semicircle (as shown in FIG. 2a), a rectangle (as shown in FIG. 2b), or a square (as shown in FIG. 2d). The percentage S1 of the area of the groove 111 in the total area of the first region 11 is greater than 0% and less than or equal to 50%. By controlling the area percentage S1 of the groove 111 to fall within the foregoing range, the resistance per unit length R1 of the first region 11 and the resistance per unit length R2 of the second region 12 are caused to satisfy 1.5 ≤ R1/R2 ≤ 12, and the resistance of the first region 11 is increased in comparison to the resistance of the second region 12. In this way, the tab adhesive 2 in the first region 11 melts, and the electrochemical device 100 can achieve the gas exhausting effect in advance, thereby reducing the hazards such as fire and explosion. By this means, the safety performance of the electrochemical device 100 is enhanced.

Further, when the material of the first region includes at least one of an iron alloy, a nickel alloy, an aluminum-nickel alloy, or an aluminum alloy, the percentage S1 of the area of the groove in the total area of the first region is greater than 0% and less than or equal to 50%. Preferably, the percentage S1 of the area of the groove in the total area of the first region is greater than or equal to 1% and less than or equal to 40%. In this way, by applying the material of a high resistivity to the first region, disposing a groove in the first region, and controlling the area percentage S1 of the groove to fall within the foregoing range, the resistance per unit length R1 of the first region and the resistance per unit length R2 of the second region are caused to satisfy 1.5 ≤ R1/R2 ≤ 12, and the resistance of the first region is increased in comparison to the resistance of the second region. In this way, the tab adhesive in the first region melts, and the electrochemical device can achieve the gas exhausting effect in advance, thereby reducing the hazards such as fire and explosion. By this means, the safety performance of the electrochemical device is enhanced.

In an embodiment of this application, as shown in FIG. 3e to FIG. 3i, viewed along the thickness direction of the tab 1 (referring to FIG. 2a to FIG. 2d), the shape of the hollowed-out structure 112 is at least one of a triangle (as shown in FIG. 3e), a semicircle (as shown in FIG. 3f), a rectangle (as shown in FIG. 3i), or a square (as shown in FIG. 3g and FIG. 3h). The percentage S2 of the area of the hollowed-out structure 112 in the total area of the first region 11 is greater than 0% and less than or equal to 50%. By controlling the area percentage S2 of the hollowed-out structure 112 to fall within the foregoing range, the resistance per unit length R1 of the first region 11 and the resistance per unit length R2 of the second region 12 are caused to satisfy 1.5 ≤ R1/R2 ≤ 12, and the resistance of the first region 11 is increased in comparison to the resistance of the second region 12. In this way, the tab adhesive 2 in the first region 11 melts, and the electrochemical device 100 can achieve the gas exhausting effect in advance, thereby reducing the hazards such as fire and explosion. By this means, the safety performance of the electrochemical device 100 is enhanced.

Further, when the material of the first region includes at least one of an iron alloy, a nickel alloy, an aluminum-nickel alloy, or an aluminum alloy, the percentage S2 of the area of the hollowed-out structure in the total area of the first region is greater than 0% and less than or equal to 50%. Preferably, the percentage S2 of the area of the hollowed-out structure in the total area of the first region is greater than or equal to 1% and less than or equal to 40%. In this way, by applying the material of a high resistivity to the first region, disposing a hollowed-out structure in the first region, and controlling the area percentage of the hollowed-out structure to fall within the foregoing range, the resistance per unit length R1 of the first region and the resistance per unit length R2 of the second region are caused to satisfy 1.5 ≤ R1/R2 ≤ 12, and the resistance of the first region is increased in comparison to the resistance of the second region. In this way, the tab adhesive in the first region melts, and the electrochemical device can achieve the gas exhausting effect in advance, thereby reducing the hazards such as fire and explosion. By this means, the safety performance of the electrochemical device is enhanced.

The tab adhesive includes a first adhesive layer and a second adhesive layer. A melting point of the first adhesive layer is 110 °C to 135 °C, and a melting point of the second adhesive layer is 145 °C to 180 °C. In this way, when the first region heats up, the low-melting first adhesive layer melts first, and a top seal between the tab at the melted part and the housing fails. The gas generated by an electrolytic solution can be exhausted through the failed part of the top seal before the temperature of the electrochemical device reaches a critical failure temperature, so that the electrochemical device achieves the gas exhausting effect in advance. In this way, the hazards such as fire and explosion of the electrochemical device are reduced, and the safety performance of the electrochemical device is enhanced. In addition, the high-melting second adhesive layer increases the strength of sealing between the tab and the housing, prevents corrosion and short circuits between the tab and the housing caused by over-melting of the tab adhesive, and in turn, enhances the safety performance of the electrochemical device.

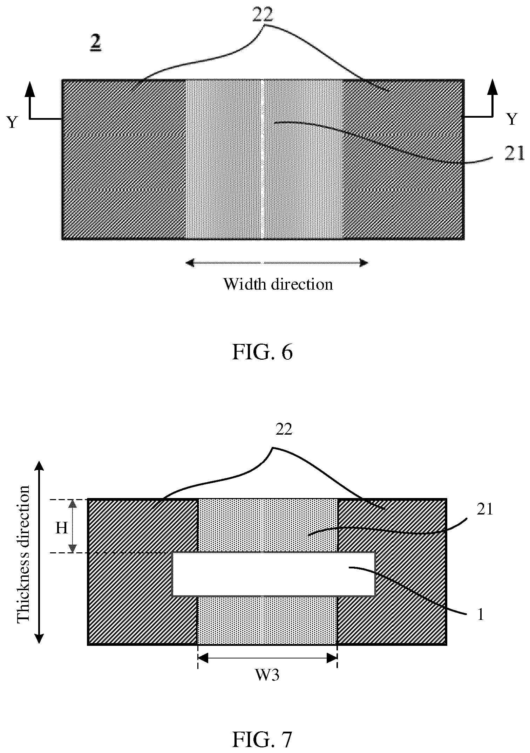

Along a width direction of the tab, the tab adhesive is of a strip-shaped composite structure. The first adhesive layer and the second adhesive layer are disposed alternately along the width direction of the tab. The number of the first adhesive layers may be 1 to 4. The tab adhesive of the foregoing structure facilitates reduction of the thickness occupied by the top seal. For example, the number of the first adhesive layers 21 is 1, 2, 3, or 4. For example, as shown in FIG. 4 and FIG. 5, FIG. 4 is a schematic structural diagram of a tab adhesive in some embodiments of this application (including the tab, not shown). Along the width direction of the tab 1 (referring to FIG. 1), the tab adhesive 2 is of a strip-shaped composite structure. The first adhesive layer 21 and the second adhesive layer 22 are disposed alternately along the width direction of the tab 1. The number of the first adhesive layers 21 is 4. For example, as shown in FIG. 6 and FIG. 7, FIG. 6 is a schematic structural diagram of a tab adhesive in some other embodiments of this application. The tab adhesive 2 is of a strip-shaped composite structure, in which the number of the first adhesive layers 21 is 1. As shown in FIG. 7, the first adhesive layer 21 contacts the tab 1 preferentially, thereby facilitating the electrochemical device 100 in implementing the gas exhausting effect in advance. The number of the second adhesive layers 22 is not particularly limited in this application, as long as the objectives of this application can be achieved.

In an embodiment of this application, referring to FIG. 4, viewed along the thickness direction of the tab 1, a percentage S3 of an area of the first adhesive layer 21 in a total area of the tab adhesive 2 is 20% to 80%. When the percentage S3 of the area of the first adhesive layer 21 in the total area of the tab adhesive 2 is unduly low (for example, less than 20%), the effect of the electrochemical device 100 exhausting the gas in advance is impaired, and in turn, the safety performance of the electrochemical device 100 is impaired. When the percentage S3 of the area of the first adhesive layer 21 in the total area of the tab adhesive 2 is unduly high (for example, higher than 80%), the strength of sealing between the tab 1 and the housing 3 is impaired, and in turn, the safety performance of the electrochemical device 100 is impaired. Controlling the area percentage of the first adhesive layer 21 to fall within the foregoing range facilitates enhancement of the safety performance of the electrochemical device 100.

In an embodiment of this application, referring to FIG. 5, a thickness H of the tab adhesive 2 is 40 µm to 200 µm. By controlling the thickness H of the tab adhesive 2 to fall within the foregoing range, the protective effect of the tab adhesive 2 can be exerted sufficiently, and the loss of the energy density of the electrochemical device 100 caused by the excessive thickness of the tab adhesive 2 (for example, thicker than 200 µm) is avoided, thereby reducing the possibility of impairing the energy density of the electrochemical device 100.

In an embodiment of this application, referring to FIG. 5, in the thickness direction of the tab 1, the tab adhesive 2 is disposed on both sides of the tab 1. The tab adhesives 2 on the two sides of the tab 1 are identical in structure and properties. It is hereby noted that in another embodiment of this application, the tab adhesives on the two sides of the tab may differ in structure and properties, as long as the objectives of this application can be achieved.

The method for preparing the tab adhesive is not particularly limited in this application, as long as the objectives of this application can be achieved. For example, the tab adhesive of a strip-shaped composite structure may be prepared by the following steps: feeding a first adhesive layer ingredient and a second adhesive layer ingredient into the corresponding extruder hoppers separately for hot-melting and co-extrusion, and then rapidly cooling and shaping the extruded product into adhesive pieces; making a tab adhesive of a single-layer strip-shaped composite structure by alternately disposing a plurality of first adhesive layer extrusion outlets and second adhesive layer extrusion outlets in a horizontal direction; and putting a tab between 2 pieces of the tab adhesive, and compounding the tab adhesive and the tab by hot-pressing.

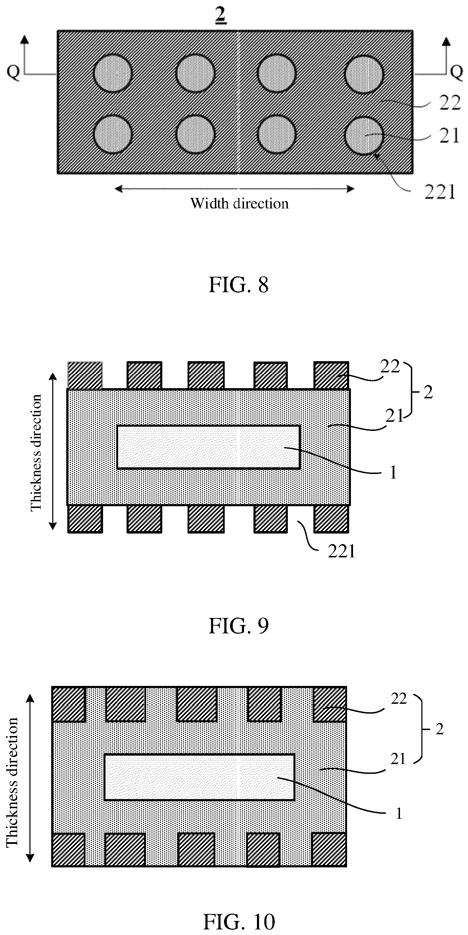

In an embodiment of this application, as shown in FIG. 8 and FIG. 9, the tab adhesive 2 includes a first adhesive layer 21 and a second adhesive layer 22. The second adhesive layer 22 includes a plurality of through-holes 221 that run through the second adhesive layer 22 along the thickness direction of the second adhesive layer 22 (identical to the thickness direction of the tab 1). After being top-sealed and hot-pressed, as shown in FIG.10, the first adhesive layer 21 is embedded into the through-hole 221 of the second adhesive layer 22, thereby enhancing adhesiveness between the first adhesive layer 21 and the second adhesive layer 22 and reducing the possibility of delamination between the first adhesive layer 21 and the second adhesive layer 22. This increases the strength of sealing between the tab 1 and the housing 3, prevents corrosion and short circuits between the tab 1 and the housing 3 caused by over-melting of the tab adhesive 2, and in turn, enhances the safety performance of the electrochemical device 100. It is hereby noted that the size, quantity, and position of the through-holes 221 are not particularly limited in this application, as long as the objectives of this application can be achieved. FIG. 8 to FIG. 10 are intended for an illustrative purpose only.

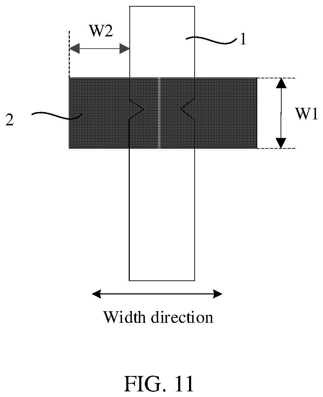

In an embodiment of this application, referring to FIG. 11, a width W1 of the tab adhesive 2 is 1 mm to 10 mm, and a shoulder width W2 of the tab adhesive 2 is 0.2 mm to 10 mm. The shoulder width W2 of the tab adhesive 2 is a distance by which one side of the tab adhesive 2 exceeds an edge of the tab 1 on the same side along a width direction of the tab. Controlling the width W1 and shoulder width W2 of the tab adhesive 2 to fall within the foregoing ranges facilitates increase of the strength of sealing between the tab 1 and the housing 3, prevents corrosion and short circuits between the tab 1 and the housing 3 caused by over-melting of the tab adhesive 2, and in turn, enhances the safety performance of the electrochemical device 100.

The material of the first adhesive layer is polyethylene, and the material of the second adhesive layer is polypropylene. The foregoing materials enable the melting point of the first adhesive layer and the second adhesive layer to fall within the range specified herein, facilitate the electrochemical device to achieve the gas exhausting effect in advance, increase the sealing strength of the electrochemical device, and enhance the safety performance of the electrochemical device. The weight-average molecular weight of the foregoing materials is not particularly limited in this application, as long as the objectives of this application can be achieved.

The electrode assembly according to this application includes a separator, a positive electrode plate, and a negative electrode plate. The separator is configured to separate the positive electrode plate from the negative electrode plate, prevent an internal short circuit of the electrochemical device, and allow electrolyte ions to pass freely to implement electrochemical charging and discharging processes. The structure of the electrode assembly is not particularly limited in this application, as long as the objectives of this application can be achieved. For example, the structure of the electrode assembly may be a jelly-roll structure or a stacked structure. The numbers and types of the separators, positive electrode plates, and negative electrode plates are not particularly limited in this application, as long as the objectives of this application can be achieved.

In this application, the "tab" includes a positive tab and/or a negative tab. The positive tab is led out of the positive electrode plate, and the negative tab is led out of the negative electrode plate. The "first region" in this application means a first region of the positive tab and/or the negative tab. A person skilled in the art understands that, in some embodiments of this application, the first region of the positive tab is covered by the tab adhesive according to this application, and the first region of the negative tab is covered by the tab adhesive according to the prior art. In some other embodiments of this application, the first region of the negative tab is covered by the tab adhesive according to this application, and the first region of the positive tab is covered by the tab adhesive according to the prior art. In still some other embodiments of this application, both the first region of the positive tab and the first region of the negative tab are covered by the tab adhesive according to this application.

The thickness, width, and length of the tab are not particularly limited in this application, as long as the objectives of this application can be achieved. For example, the thickness of the tab is 0.05 mm to 0.5 mm, the width of the tab is 2 mm to 20 mm, and the length of the tab is 15 mm to 100 mm.

The material of the second region of the tab is not particularly limited in this application, as long as the objectives of this application can be achieved. For example, the material of the second region of the positive tab includes at least one of aluminum (Al), an aluminum-nickel alloy, or an aluminum alloy. The material of the second region of the negative tab includes at least one of nickel (Ni), copper (Cu), or nickel-plated copper (Ni-Cu).

The housing in this application generally means an aluminum plastic film housing.

The electrochemical device according to this application further includes an electrolytic solution. The type of the electrolytic solution is not particularly limited in this application, as long as the objectives of this application can be achieved.

A second aspect of this application provides an electronic device. The electronic device includes the electrochemical device according to any one embodiment of this application described above. The safety performance is good on the part of the electrochemical device according to this application, and therefore, is also good on the part of the electronic device.

The electronic device according to this application is not particularly limited, and may be any electronic device known in the prior art. For example, the electronic device includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The terms used in this application are generally terms that are commonly used by a person skilled in the art. If a term used herein is inconsistent with the commonly used terms, the term used in this application prevails.

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test Methods and Devices

### Testing the resistance per unit length

Resistance per unit length = resistance of specimen/length of specimen, where the resistance of the specimen is measured with a multimeter.

### Overcharge test

Charging a fully discharged lithium-ion battery until a voltage of 6 V in a 25 °C environment, and then charging the battery at a constant voltage for 7 hours. Monitoring the surface temperature of a main body of the lithium-ion battery and the temperature change at the seal of the tab. Determining that the lithium-ion battery has passed the test if the battery does not catch fire or emit smoke. During the monitoring, the maximum temperature on the surface of the main body of the lithium-ion battery is denoted as T1 (°C), and the maximum temperature at the seal of the tab is denoted as T2 (°C).

### Embodiment 1-1

Using lithium-ion batteries of the model 702850 (manufactured by Amperex Technology Limited) as specimens.

In the batteries, the positive tab is 0.08 mm thick, 4 mm wide, and 40 mm long. The materials of both the first region and the second region are aluminum. The tab adhesive that covers the first region of the positive tab is of a single-layer structure. The tab adhesive is made of polypropylene that melts at 160 °C, and is 80 µm thick, 4.5 mm wide, and 2.2 mm in shoulder width.

The negative tab is 0.08 mm thick, 4 mm wide, and 40 mm long. The materials of both the first region and the second region are nickel. Two semicircular hollowed-out structures shown in FIG. 3f (with a radius of 1 mm) are disposed in the first region of the negative tab. The area percentage S2 of the hollowed-out structure in the total area of the first region is 39%. The tab adhesive covering the first region of the negative tab is of a strip-shaped composite structure shown in FIG. 6 and FIG. 7. The number of the first adhesive layers 21 is 1, and the number of the second adhesive layers 22 is 2. The first adhesive layer 21 is located between the two second adhesive layers 22, and is in contact with the first region of the negative tab. The first adhesive layer melts at 120 °C, and is made of PE. The second adhesive layers melt at 160 °C, and are made of PP. Of the tab adhesive, the thickness H is 80 µm, the width W1 is 4.5 mm, and the shoulder width W2 is 2.2 mm. The width W3 of the first adhesive layer is 3 mm, and the percentage S3 of the area of the first adhesive layer in the total area of the tab adhesive is 33%.

### Embodiment 1-2 to Embodiment 1-4

Identical to Embodiment 1-1 except that the relevant preparation parameters are adjusted according to Table 1.

### Embodiment 1-5 to Embodiment 1-7

Identical to Embodiment 1-1 except that: the relevant preparation parameters are adjusted according to Table 1; and the tab adhesive covering the first region of the positive tab and the tab adhesive covering the first region of the negative tab are contrary to the settings in Embodiment 1-1.

### Embodiment 1-8

Identical to Embodiment 1-1 except that: the relevant preparation parameters are adjusted according to Table 1; and both the tab adhesive covering the first region of the positive tab and the tab adhesive covering the first region of the negative tab are the tab adhesive that, in Embodiment 1-1, covers the first region of the negative tab.

### Embodiment 1-9 to Embodiment 1-10

Identical to Embodiment 1-4 except that the relevant preparation parameters are adjusted according to Table 1.

### Embodiment 1-11

Identical to Embodiment 1-1 except that: two semicircular grooves 111 (with a radius of 1 mm) shown in FIG. 2a are disposed in the first region of the negative tab; the percentage S1 of the area of the grooves 111 in the total area of the first region is 1%; and the relevant preparation parameters are adjusted according to Table 1.

### Embodiment 1-12 to Embodiment 1-13

Identical to Embodiment 1-11 except that the relevant preparation parameters are adjusted according to Table 1.

### Embodiment 2-1 to Embodiment 2-5

Identical to Embodiment 1-1 except that the relevant preparation parameters are adjusted according to Table 1.

### Embodiment 2-13 to Embodiment 2-14

Identical to Embodiment 1-1 except that the relevant preparation parameters are adjusted according to Table 1.

### Comparative Embodiment 1

Identical to Embodiment 1-1 except that: no hollowed-out structure is disposed in the first region of the negative tab; and the tab adhesive covering the first region of the negative tab is identical to the tab adhesive covering the first region of the positive tab.

### Comparative Embodiment 2

Identical to Embodiment 1-1 except that no hollowed-out structure is disposed in the first region of the negative tab.

Table 1 to Table 2 show the preparation parameters and performance parameters of the embodiments and comparative embodiments.

**Table 1**

| | Positive tab | | | | | | | Negative tab | | | | | | | Overcharge test | | |
|---|---|---|---|---|---|---|---|---|---|---|---|---|---|---|---|---|---|
| | First region | | | | Second region | | R1/R2 | First region | | | | Second region | | R1/R2 | Passed | T1 (°C) | T2 (°C) |
| | Material | Groove/hollowed-out structure | S1 or S2 (%) | R1 (mΩ/mm) | Material | R2 (mΩ/mm) | | Material | Groove/hollowed-out structure | S1 or S2 (%) | R1 (mΩ/mm) | Material | R2 (mΩ/mm) | | | | |
| Embodiment 1-1 | Aluminum | None | \ | 0.088 | Aluminum | 0.088 | 1.00 | Nickel | Hollowed-out structure | 39 | 0.352 | Nickel | 0.214 | 1.65 | Yes | 120 | 120 |
| Embodiment 1-2 | Aluminum | None | \ | 0.088 | Aluminum | 0.088 | 1.00 | Nickel-plated copper alloy | Hollowed-out structure | 39 | 0.195 | Nickel-plated copper alloy | 0.119 | 1.65 | Yes | 124 | 120 |
| Embodiment 1-3 | Aluminum | None | \ | 0.088 | Aluminum | 0.088 | 1.00 | Nickel alloy | None | \ | 1.250 | Nickel | 0.214 | 5.85 | Yes | 112 | 122 |
| Embodiment 1-4 | Aluminum | None | \ | 0.088 | Aluminum | 0.088 | 1.00 | Nickel alloy | Hollowed-out structure | 39 | 2.058 | Nickel | 0.214 | 9.63 | Yes | 110 | 122 |
| Embodiment 1-5 | Aluminum | Hollowed-out structure | 39 | 0.146 | Aluminum | 0.088 | 1.65 | Nickel | None | \ | 0.214 | Nickel | 0.214 | 1.00 | Yes | 125 | 122 |
| Embodiment 1-6 | Aluminum-nickel alloy | None | \ | 0.307 | Aluminum | 0.088 | 3.47 | Nickel | None | \ | 0.214 | Nickel | 0.214 | 1.00 | Yes | 118 | 119 |
| Embodiment 1-7 | Aluminum-nickel alloy | Hollowed-out structure | 39 | 0.506 | Aluminum | 0.088 | 5.72 | Nickel | None | \ | 0.214 | Nickel | 0.214 | 1.00 | Yes | 116 | 122 |
| Embodiment 1-8 | Aluminum-nickel alloy | Hollowed-out structure | 39 | 0.506 | Aluminum | 0.088 | 5.72 | Nickel alloy | Hollowed-out structure | 39 | 2.058 | Nickel | 0.214 | 9.63 | Yes | 111 | 122 |
| Embodiment 1-9 | Aluminum | None | \ | 0.088 | Aluminum | 0.088 | 1.00 | Nickel alloy | Hollowed-out structure | 1 | 1.263 | Nickel | 0.214 | 5.91 | Yes | 112 | 121 |
| Embodiment 1-10 | Aluminum | None | \ | 0.088 | Aluminum | 0.088 | 1.00 | Nickel alloy | Hollowed-out structure | 50 | 2.500 | Nickel | 0.214 | 11.70 | Yes | 108 | 124 |
| Embodiment 1-11 | Aluminum | None | \ | 0.088 | Aluminum | 0.088 | 1.00 | Nickel alloy | Groove | 1 | 1.263 | Nickel | 0.214 | 5.91 | Yes | 113 | 121 |
| Embodiment 1-12 | Aluminum | None | \ | 0.088 | Aluminum | 0.088 | 1.00 | Nickel alloy | Groove | 39 | 2.058 | Nickel | 0.214 | 9.63 | Yes | 111 | 122 |
| Embodiment 1-13 | Aluminum | None | \ | 0.088 | Aluminum | 0.088 | 1.00 | Nickel alloy | Groove | 50 | 2.500 | Nickel | 0.214 | 11.70 | Yes | 109 | 122 |
| Comparative Embodiment 1 | Aluminum | None | \ | 0.088 | Aluminum | 0.088 | 1.0 | Nickel | None | \ | 0.214 | Nickel | 0.214 | 1.0 | No | 130 | 90 |
| Comparative Embodiment 1 | Aluminum | None | \ | 0.088 | Aluminum | 0.088 | 1.0 | Nickel | None | \ | 0.214 | Nickel | 0.214 | 1.0 | No | 130 | 90 |

| | | | | | | | | | | | | | | | | | |
|---|---|---|---|---|---|---|---|---|---|---|---|---|---|---|---|---|---|
| Note: "\" in Table 1 represents nonexistence of the relevant preparation parameter; and Comparative Embodiment 1 differs from Comparative Embodiment 2 in the tab adhesive covering the first region of the negative tab. | | | | | | | | | | | | | | | | | |

**Table 2**

| | Tab adhesive covering first region of tab | | | | | | | | | | | | | | Overcharge test | | |
|---|---|---|---|---|---|---|---|---|---|---|---|---|---|---|---|---|---|
| | Positive electrode/negative electrode | Structure | First adhesive layer | | | | | Second adhesive layer | | | | Thickne ss (µm) | W1 (mm) | W2 (mm) | Passed | T1 (°C) | T2 (°C) |
| | | | Melting point (°C) | Material | Thickness (µm) | Number of pieces or layers | S3 or S4 (%) | Melting point (°C) | Material | Thickness (µm) | Number of pieces or layers | | | | | | |
| Embodiment 1-1 | Negative electrode | Strip-shaped composite structure | 120 | PE | \ | 1 | 33 | 160 | PP | \ | 2 | 80 | 4.5 | 2.2 | Yes | 120 | 120 |
| Embodiment 2-1 | Negative electrode | Strip-shaped composite structure | 110 | PE | \ | 1 | 33 | 145 | PP | \ | 2 | 80 | 4.5 | 2.2 | Yes | 113 | 110 |
| Embodiment 2-2 | Negative electrode | Strip-shaped composite structure | 135 | PE | \ | 1 | 33 | 180 | PP | \ | 2 | 80 | 4.5 | 2.2 | Yes | 127 | 125 |
| Embodiment 2-3 | Negative electrode | Strip-shaped composite structure | 120 | PE | \ | 3 | 33 | 160 | PP | \ | 4 | 80 | 4.5 | 2.2 | Yes | 119 | 120 |
| Embodiment 2-4 | Negative electrode | Strip-shaped composite structure | 120 | PE | \ | 1 | 20 | 160 | PP | \ | 2 | 80 | 4.5 | 2.2 | Yes | 119 | 122 |
| Embodiment 2-5 | Negative electrode | Strip-shaped composite structure | 120 | PE | \ | 1 | 80 | 160 | PP | \ | 2 | 80 | 4.5 | 2.2 | Yes | 122 | 120 |
| Embodiment 2-13 | Negative electrode | Strip-shaped composite structure | 120 | PE | \ | 1 | 33 | 160 | PP | \ | 2 | 80 | 1 | 0.2 | Yes | 118 | 120 |
| Embodiment 2-14 | Negative electrode | Strip-shaped composite structure | 120 | PE | \ | 1 | 33 | 160 | PP | \ | 2 | 80 | 10 | 10 | Yes | 124 | 120 |

| | | | | | | | | | | | | | | | | | |
|---|---|---|---|---|---|---|---|---|---|---|---|---|---|---|---|---|---|
| Note: "\" in Table 2 represents nonexistence of the relevant preparation parameter; and Embodiment 2-6 differs from Embodiment 2-15 in that the second adhesive layer in Embodiment 2-15 includes 8 through-holes. | | | | | | | | | | | | | | | | | |

As can be seen from Embodiment 1-1 to Embodiment 1-13 and Comparative Embodiment 1 to Comparative Embodiment 2, in the electrochemical device according to this application, a high-resistivity material is applied to the first region of the positive tab and/or the negative tab, and/or a groove or a hollowed-out structure is disposed in the first region, so that the resistance per unit length R1 of the first region and the resistance per unit length R2 of the second region of the positive tab and/or the negative tab satisfy 1.5 ≤ R1/R2 ≤ 12. In contrast to the electrochemical devices of Comparative Embodiment 1 to Comparative Embodiment 2, in the electrochemical devices of Embodiment 1-1 to Embodiment 1-13, the maximum temperature T2 at the seal of the tab is close to or greater than or equal to the melting point of the first adhesive layer, so as to make the top seal fail. The gas generated by the electrolytic solution is exhausted from the failed part of the top seal. Therefore, the electrochemical devices of Embodiment 1-1 to Embodiment 1-13 can pass the overcharge test and exhibit higher safety performance.

The melting points of the first adhesive layer and the second adhesive layer generally also affect the safety performance of the electrochemical device. As can be seen from Embodiment 1-1, and Embodiment 2-1 to Embodiment 2-2, the melting points of the first adhesive layer and the second adhesive layer fall within the ranges specified herein, and therefore, the electrochemical device exhibits good safety performance.

The area percentage S3 or S4 of the first adhesive layer generally also affects the safety performance of the electrochemical device. As can be seen from Embodiment 1-1, Embodiment 2-4, and Embodiment 2-5, the area percentage S3 or S4 of the first adhesive layer falls within the range specified herein, and therefore, the electrochemical device exhibits good safety performance.

When the tab adhesive is of a strip-shaped composite structure, the number of the first adhesive layers generally also affects the safety performance of the electrochemical device. As can be seen from Embodiment 1-1 and Embodiment 2-3, the number of the first adhesive layers falls within the range specified herein, and therefore, the electrochemical device exhibits good safety performance.

The width and the shoulder width of the tab adhesive generally also affect the safety performance of the electrochemical device. As can be seen from Embodiment 1-1, Embodiment 2-13, and Embodiment 2-14, the width and the shoulder width of the tab adhesive fall within the ranges specified herein, and therefore, the electrochemical device exhibits good safety performance.

The through-holes on the second adhesive layer generally also affect the safety performance of the electrochemical device. As can be seen from Embodiment 2-6 and Embodiment 2-15, through-holes are disposed on the second adhesive layer, and therefore, the electrochemical device exhibits good safety performance.

## Claims

1. An electrochemical device (100), comprising an electrode assembly, a tab (1), a tab adhesive (2), and a housing for accommodating the electrode assembly, wherein one end of the tab (1) is electrically connected to the electrode assembly, another end of the tab (1) extends out of the housing (3), the tab (1) comprises a first region (11) and a second region (12), and the first region (11) is covered by the tab adhesive (2); and
a resistance per unit length R1 of the first region (11) and a resistance per unit length R2 of the second region (12) satisfy: 1.5 ≤ R1/R2 ≤ 12, the resistance per unit length R2 of the first region (11) being 0.05 m Ω/mm to 0.3 m Ω/mm and the resistance per unit length R1 of the first region being 0.075 m Ω/mm to 3.6 m Ω/mm;
wherein the tab adhesive (2) comprises a first adhesive layer (21) and a second adhesive layer (22); wherein a material of the first adhesive layer (21) is polyethylene; and a material of the second adhesive layer (22) is polypropylene, and the material of the first adhesive layer (21) has a lower melting point than the material of the second adhesive layer (22);
wherein along a width direction of the tab (1), the tab adhesive (2) is of a strip shaped composite structure; the second adhesive layer (22) and the first adhesive layer (21) are disposed alternately along the width direction of the tab (1).

2. The electrochemical device (100) according to claim 1, wherein a material of the first region (11) comprises at least one of nickel, aluminum, a nickel-plated copper alloy, an iron alloy, a nickel alloy, an aluminum-nickel alloy, or an aluminum alloy.

3. The electrochemical device (100) according to claim 1, wherein the first region (11) comprises at least one groove (111) along a thickness direction of the tab (1) or at least one hollowed-out structure (112) running through the tab (1) along the thickness direction of the tab (1).

4. The electrochemical device (100) according to claim 3, wherein, viewed along a width direction of the tab (1), a shape of the groove (111) is at least one of a triangle, a semicircle, a rectangle, or a square; and a percentage of an area of the groove (111) in a total area of the first region (11) is greater than 0% and less than or equal to 50%.

5. The electrochemical device (100) according to claim 3, wherein, viewed along the thickness direction of the tab (1), a shape of the hollowed-out structure (112) is at least one of a triangle, a semicircle, a rectangle, or a square; and a percentage of an area of the hollowed-out structure (112) in a total area of the first region (11) is greater than 0% and less than or equal to 50%.

6. The electrochemical device (100) according to claim 1, wherein the tab adhesive (2) comprises a first adhesive layer (21) and a second adhesive layer (22), a melting point of the first adhesive layer (21) is 110 °C to 135 °C, and a melting point of the second adhesive layer (22) is 145 °C to 180 °C.

7. The electrochemical device (100) according to claim 1, wherein a number of the first adhesive layers (21) are 1 to 4.

8. The electrochemical device (100) according to claim 1, wherein a thickness of the tab adhesive (2) is 40 *µ*m to 200 µm.

9. The electrochemical device (100) according to claim 1, wherein, viewed along a thickness direction of the tab (1), a percentage of an area of the first adhesive layer (21) in a total area of the tab adhesive (2) is 20% to 80%.

10. The electrochemical device (100) according to claim 1, wherein a width of the tab adhesive (2) is 1 mm to 10 mm, and a shoulder width of the tab adhesive (2) is 0.2 mm to 10 mm; and
the shoulder width of the tab adhesive (2) is a distance by which one side of the tab adhesive (2) exceeds an edge of the tab (1) on a same side along a width direction of the tab (1).

11. An electronic device, wherein the electronic device comprises the electrochemical device (100) according to any one of claims 1 to 10.

## Patentansprüche

1. Elektrochemische Vorrichtung (100), umfassend eine Elektrodenbaugruppe, eine Lasche (1), einen Laschenklebestreifen (2) und ein Gehäuse zur Aufnahme der Elektrodenbaugruppe, wobei ein Ende der Lasche (1) elektrisch mit der Elektrodenbaugruppe verbunden ist, ein anderes Ende der Lasche (1) sich aus dem Gehäuse (3) heraus erstreckt, die Lasche (1) einen ersten Bereich (11) und einen zweiten Bereich (12) umfasst, und der erste Bereich (11) mit dem Laschenklebestreifen (2) bedeckt ist; und
ein Widerstand pro Einheitslänge R1 des ersten Bereichs (11) und ein Widerstand pro Einheitslänge R2 des zweiten Bereichs (12) Folgendes erfüllen: 1,5 ≤ R1/R2 ≤ 12, wobei der Widerstand pro Einheitslänge R2 des ersten Bereichs (11) 0,05 mΩ/mm bis 0,3 mΩ/mm beträgt und der Widerstand pro Einheitslänge R1 des ersten Bereichs 0,075 mΩ/mm bis 3,6 mΩ/mm beträgt;
wobei der Laschenklebestreifen (2) eine erste Klebeschicht (21) und eine zweite Klebeschicht (22) umfasst; wobei ein Material der ersten Klebeschicht (21) Polyethylen ist; und ein Material der zweiten Klebeschicht (22) Polypropylen ist, und das Material der ersten Klebeschicht (21) einen niedrigeren Schmelzpunkt aufweist als das Material der zweiten Klebeschicht (22);
wobei entlang einer Breitenrichtung der Lasche (1) der Laschenklebestreifen (2) eine streifenförmige Verbundstruktur aufweist; die zweite Klebeschicht (22) und die erste Klebeschicht (21) abwechselnd entlang der Breitenrichtung der Lasche (1) angeordnet sind.

2. Elektrochemische Vorrichtung (100) nach Anspruch 1, wobei ein Material des ersten Bereichs (11) mindestens eines von Nickel, Aluminium, einer vernickelten Kupferlegierung, einer Eisenlegierung, einer Nickellegierung, einer Aluminium-Nickel-Legierung oder einer Aluminiumlegierung umfasst.

3. Elektrochemische Vorrichtung (100) nach Anspruch 1, wobei der erste Bereich (11) mindestens eine Nut (111) entlang einer Dickenrichtung der Lasche (1) oder mindestens eine durch die Lasche (1) verlaufende Hohlstruktur (112) entlang der Dickenrichtung der Lasche (1) umfasst.

4. Elektrochemische Vorrichtung (100) nach Anspruch 3, wobei, entlang einer Breitenrichtung der Lasche (1) betrachtet, eine Form der Nut (111) mindestens eine Form eines Dreiecks, eines Halbkreises, eines Rechtecks oder eines Quadrats ist; und ein Prozentsatz einer Fläche der Nut (111) in einer Gesamtfläche des ersten Bereichs (11) größer als 0 % und kleiner oder gleich 50 % ist.

5. Elektrochemische Vorrichtung (100) nach Anspruch 3, wobei, entlang der Dickenrichtung der Lasche (1) betrachtet, eine Form der Hohlstruktur (112) mindestens eine Form eines Dreiecks, eines Halbkreises, eines Rechtecks oder eines Quadrats ist; und ein Prozentsatz einer Fläche der Hohlstruktur (112) in einer Gesamtfläche des ersten Bereichs (11) größer als 0 % und kleiner oder gleich 50 % ist.

6. Elektrochemische Vorrichtung (100) nach Anspruch 1, wobei der Laschenklebestreifen (2) eine erste Klebeschicht (21) und eine zweite Klebeschicht (22) umfasst, ein Schmelzpunkt der ersten Klebeschicht (21) 110 °C bis 135 °C beträgt und ein Schmelzpunkt der zweiten Klebeschicht (22) 145 °C bis 180 °C beträgt.

7. Elektrochemische Vorrichtung (100) nach Anspruch 1, wobei eine Anzahl der ersten Klebeschichten (21) 1 bis 4 beträgt.

8. Elektrochemische Vorrichtung (100) nach Anspruch 1, wobei eine Dicke des Laschenklebestreifens (2) 40 µ m bis 200 µ m beträgt.

9. Elektrochemische Vorrichtung (100) nach Anspruch 1, wobei, entlang einer Dickenrichtung der Lasche (1) betrachtet, ein Prozentsatz einer Fläche der ersten Klebeschicht (21) in einer Gesamtfläche des Laschenklebestreifens (2) 20 % bis 80 % beträgt.

10. Elektrochemische Vorrichtung (100) nach Anspruch 1, wobei eine Breite des Laschenklebestreifens (2) 1 mm bis 10 mm beträgt und eine Schulterbreite des Laschenklebestreifens (2) 0,2 mm bis 10 mm beträgt; und
die Schulterbreite des Laschenklebestreifens (2) ein Abstand ist, um den eine Seite des Laschenklebestreifens (2) auf einer Seite entlang einer Breitenrichtung der Lasche (1) über eine Kante der Lasche (1) hinaussteht.

11. Elektronische Vorrichtung, wobei die elektronische Vorrichtung die elektrochemische Vorrichtung (100) nach einem der Ansprüche 1 bis 10 umfasst.

## Revendications

1. Un dispositif électrochimique (100), comprenant un ensemble d'électrodes, une languette (1), un adhésif pour languette (2) et un boîtier destiné à accueillir l'ensemble d'électrodes, dans lequel une première extrémité de la languette (1) est connectée électriquement à l'ensemble d'électrodes, une seconde extrémité de la languette (1) s'étendant à l'extérieur du boîtier (3), la languette (1) comprenant une première région (11) et une deuxième région (12), et la première région (11) étant recouverte par l'adhésif pour languette (2) ; et
une résistance linéique R1 de la première région (11) et une résistance linéique R2 de la deuxième région (12) vérifiant la relation suivante : 1,5 ≤ R1/R2 ≤ 12, la résistance linéique R2 de la première région (11) étant comprise entre 0,05 mΩ/mm et 0,3 mΩ/mm et la résistance linéique R1 de ladite première région étant comprise entre 0,075 mΩ/mm et 3,6 mΩ/mm ;
dans lequel l'adhésif pour languette (2) comprend une première couche adhésive (21) et une deuxième couche adhésive (22) ; dans lequel un matériau de la première couche adhésive (21) est du polyéthylène ; et un matériau de la deuxième couche adhésive (22) est du polypropylène, le matériau de la première couche adhésive (21) présentant un point de fusion inférieur à celui du matériau de la deuxième couche adhésive (22) ;
dans lequel, selon une direction de largeur de la languette (1), l'adhésif pour languette (2) présente une structure composite en bande ; la deuxième couche adhésive (22) et la première couche adhésive (21) étant disposées alternativement selon la direction de largeur de la languette (1).

2. Le dispositif électrochimique (100) selon la revendication 1, dans lequel le matériau de la première région (11) comprend au moins l'un des matériaux suivants : nickel, aluminium, alliage de cuivre plaqué nickel, alliage de fer, alliage de nickel, alliage aluminium-nickel ou alliage d'aluminium.

3. Le dispositif électrochimique (100) selon la revendication 1, dans lequel la première région (11) comprend au moins une rainure (111) selon une direction d'épaisseur de la languette (1) ou au moins une structure évidée (112) traversant la languette (1) selon la direction d'épaisseur de ladite languette (1).

4. Le dispositif électrochimique (100) selon la revendication 3, dans lequel, selon une direction de largeur de la languette (1), la forme de la rainure (111) correspond à au moins l'une des formes suivantes : triangle, demi-cercle, rectangle ou carré ; et un pourcentage d'une surface de la rainure (111) par rapport à une surface totale de la première région (11) est strictement supérieur à 0 % et inférieur ou égal à 50 %.

5. Le dispositif électrochimique (100) selon la revendication 3, dans lequel, selon la direction d'épaisseur de la languette (1), la forme de la structure évidée (112) correspond à au moins l'une des formes suivantes : triangle, demi-cercle, rectangle ou carré ; et un pourcentage d'une surface de la structure évidée (112) par rapport à une surface totale de la première région (11) est strictement supérieur à 0 % et inférieur ou égal à 50 %.

6. Le dispositif électrochimique (100) selon la revendication 1, dans lequel l'adhésif pour languette (2) comprend une première couche adhésive (21) et une deuxième couche adhésive (22), un point de fusion de la première couche adhésive (21) étant compris entre 110 °C et 135 °C, et un point de fusion de la deuxième couche adhésive (22) étant compris entre 145 °C et 180 °C.

7. Le dispositif électrochimique (100) selon la revendication 1, dans lequel le nombre de premières couches adhésives (21) est compris entre 1 et 4.

8. Le dispositif électrochimique (100) selon la revendication 1, dans lequel une épaisseur de l'adhésif pour languette (2) est comprise entre 40 µm et 200 µm.

9. Le dispositif électrochimique (100) selon la revendication 1, dans lequel, selon la direction d'épaisseur de la languette (1), un pourcentage d'une surface de la première couche adhésive (21) par rapport à une surface totale de l'adhésif pour languette (2) est compris entre 20 % et 80 %.

10. Le dispositif électrochimique (100) selon la revendication 1, dans lequel une largeur de l'adhésif pour languette (2) est comprise entre 1 mm et 10 mm, et une largeur de débord de l'adhésif pour languette (2) est comprise entre 0,2 mm et 10 mm ;
la largeur de débord de l'adhésif pour languette (2) correspondant à la distance par laquelle un côté de l'adhésif pour languette (2) dépasse un bord de la languette (1) dudit même côté selon une direction de largeur de la languette (1).

11. Un dispositif électronique, **caractérisé en ce qu'**il comprend le dispositif électrochimique (100) selon l'une quelconque des revendications 1 à 10.
